Europäisches Patentamt

European Patent Office

Office européen des brevets

(19)

(11) Veröffentlichungsnummer : **0 031 014 B1**

(12) # EUROPÄISCHE PATENTSCHRIFT

(45) Veröffentlichungstag der Patentschrift :
21.03.84

(21) Anmeldenummer : 80106754.7

(22) Anmeldetag : 03.11.80

(51) Int. Cl.³ : **H 04 B   9/00**, H 04 J   4/00,
**H 04 N   7/10**

(54) **Fernmeldesystem.**

(30) Priorität : 20.12.79 DE 2951495

(43) Veröffentlichungstag der Anmeldung :
01.07.81 Patentblatt 81/26

(45) Bekanntmachung des Hinweises auf die Patenterteilung : 21.03.84 Patentblatt 84/12

(84) Benannte Vertragsstaaten :
AT BE CH DE FR GB IT LI NL SE

(56) Entgegenhaltungen :
DE-A- 2 634 357
DE-B- 1 227 079
US-A- 4 061 577
US-A- 4 075 429
NACHRICHTENTECHNISCHE ZEITSCHRIFT, Band 31,
Heft   1,   Jänner   1978,   VDE-Verlag,   Berlin;
W. HERZIG, R. HILDENBRAND u. M. PRÖGLER, "Ein
experimentelles 300-Mbit/s-Nachrichtensystem mit
dezentraler Vermittlung", Seiten 63-66

(73) Patentinhaber : **SIEMENS AKTIENGESELLSCHAFT
Berlin und München Wittelsbacherplatz 2
D-8000 München 2 (DE)**

(72) Erfinder : **Christiansen, Hans-Martin Dipl.-Ing.
Minorstrasse 12a
D-8000 München 71 (DE)** ·

Fernmeldesystem

Neuere Entwicklungen der Fernmeldetechnik führen zu Breitbandkommunikationsnetzen mit durch Lichtwellenleiter gebildeten Teilnehmerleitungen, wobei sich in der Teilnehmerebene ein Sternnetz von Lichtwellenleitern mit einem Lichtwellenleiter je Wohnungseinheit als zweckmäßig erweist, der eine (zweckmäßigerweise mit der nächstgelegenen Fernsprech-Vermittlungsstelle räumlich vereinigte) zentrale Verteiler- bzw. Vermittlungsstelle mit der Wohnung des Teilnehmers verbindet und über den ggf. alle Fernmeldedienste für die betreffende Wohneinheit abgewickelt werden können, wobei für einen zukunftssicheren Wohnungsanschluß beispielsweise die Bereitstellung zumindest etwa folgender Breitbandkommunikationsmöglichkeiten in Frage kommt :

3 Videokanäle für 3 Video-Empfänger mit unabhängigem Zugriff zu allen von der Verteilungs- bzw. Vermittlungsstelle erreichbaren TV-Signalquellen bzw. dort verfügbaren TV-Programmen,

ggf. 3 Rückkanäle zur Programmauswahl und ggf. auch zur Abwicklung interaktiver Dienste sowie 20 UKW-Stereo-Tonrundfunkkanäle (ntz 32(1979)3, 150...153 ; Antenneninformation Nr. 63, Juni 1979, 3...5).

Zur Übertragung einer Mehrzahl von Videosignalen bzw. von Datensignalen von einer vorzugsweise zentralen Sendestelle über eine Lichtwellenleiterverbindung zu einer Empfangsstelle ist es (aus DE-A1-25 38 638 bzw. DE-A1-24 26 363) bekannt, die Videosignale beziehungsweise Datensignale in pulsmodulierte Signale umzuformen und diese im Zeitmultiplex über die Lichtwellenleiterverbindung zu übertragen.

Steht man in einem Breitbandkommunikationssystem etwa der oben umrissenen Art nach einer Zeitmultiplexübertragung von Videosignalen empfangsseitig vor der Aufgabe, die Mehrzahl von im Zeitmultiplex übertragenen TV-Signalen auf eine entsprechende Mehrzahl von beim Teilnehmer vorgesehenen Empfängern zu verteilen, so könnte man daran denken, zunächst wieder die ursprünglichen Videosignale rückzugewinnen und diese dann jeweils in Videofrequenzlage über empfängerindividuelle Leitungen oder mit Hilfe von Amplitudenmodulatoren in unterschiedliche Frequenzkanäle umgesetzt über eine gemeinsame Verteilerleitung den einzelnen Empfängern zuzuführen. Beide Wege erfordern indessen einen relativ hohen Aufwand, sei es an empfängerindividuellen Zubringerleitungen, sei es für eine durch wiedergewonnene Video-signale zu bewirkende Amplitudenmodulation von empfängerindividuell bereitzustellenden Trägerschwingungen.

Es ist auch schon (aus US-A-40 75 429) ein Transmultiplexer mit einer Eingangsleitung, über die eine Mehrzahl von PCM-Signalen im Zeitmultiplex übertragen wird, bekannt, bei dem die in den einzelnen Zeitkanälen übertragenen PCM-Signale in PAM-Signale umgesetzt und diese jeweils für ein Frequenzband aus der das Frequenzbändern durchlässigen Frequenzbandpässen zugeführt werden, deren Ausgangssignale auf eine weiterführende Leitung gelangen. Bei diesem bekannten Transmultiplexer ist die Taktfrequenz der PAM-Signale mit 8 kHz an dem Doppelten der oberen Sprachsignal-Grenzfrequenz von etwa 4 kHz ausgerichtet, so daß dem Abtasttheorem Genüge getan ist. Eine Ausrichtung der PAM-Signal-Taktfrequenz lediglich am Abtasttheorem hat sich indessen bei einem Einsatz eines derart bemessenen Transmultiplexers in einem Breitband-Kommunikationssystem etwa der oben umrissenen Art insofern als nicht optimal erwiesen, als dann bei Verwendung üblicher Video-Empfänger ggf. noch eine Frequenzumsetzung in eine normale Fernsehkanallage erforderlich wird.

Der Erfindung liegt nun die Aufgabe zugrunde, ein eine Breitbankommunikation etwa der oben umrissenen Art ermöglichendes Fernmeldesystem anzugeben, bei dem — ohne die Notwendigkeit einer zusätzlichen Frequenzumsetzung — die im Frequenzmultiplex auftretenden TV-Signale von vornherein in für die TV-Empfänger geeigneter Frequenzlage auftreten.

Die Erfindung betrifft ein Fernmeldesystem mit einem jeweils zwischen einer Sendestelle und einem empfangsseitigen Anschluß liegenden Leiter, über den eine Mehrzahl von sendeseitig nach Maßgabe von Kommunikationssignalen pulsmodulierten Signalen im Zeitmultiplex übertragen wird, wobei die in den einzelnen Zeitkanälen übertragenen, pulsmodulierten Signale in PAM-Signale umgesetzt und diese jeweils für ein Frequenzband aus der das Frequenzspektrum der PAM-Signale bildenden Folge von Frequenzbändern durchlässigen Frequenzbandpässen zugeführt werden, deren Ausgangssignale auf eine weiterführende Leitung gelangen ; dieses Fernmeldesystem ist erfindungsgemäß dadurch gekennzeichnet, daß in einem Breitband-Fernmeldesystem mit zwischen einer vorsugsweise zentralen Sendestelle und einem empfangsseitigen Teilnehmeranschluß liegendem Lichtwellenleiter die in von beim Teilnehmeranschluß betriebenen Videoempfängern bestimmbaren Zeitkanälen übertragen, nach Maßgabe von Videosignalen pulsmodulierten TV-Signale empfangsseitig in solche PAM-Signale, deren Taktfrequenz-Vielfache zumindest angenähert bei Bandgrenzen einer Mehrzahl von Fernsehkanälen liegen, umgesetzt und Frequenzbandpässen zugeführt werden, deren Ausgangssignale auf eine teilnehmerindividuelle Verteilerleitung gelangen, an die die beim Teilnehmeranschluß gerade betriebenen Videoempfänger angeschaltet sind.

Die Erfindung bringt den Vorteil mit sich, nicht nur eine Rückgewinnung der ursprünglichen Videosignale aus den über den Lichtwellenleiter im Zeitmultiplex übertragenen TV-Signalen und den daraus resultierenden, oben angesprochenen zusätzlichen Aufwand zu vermeiden, sondern auch sicherzustellen, daß die über die teilnehmerindividuelle Verteilerleitung im Frequenzmultiplex übertragenen TV-Signale den Video-Empfängern jeweils unmittelbar zumindest angenähert in normaler Fernsehkanallage zuführbar sind, wobei der das jeweilige Videoprogramm wiedergebende Fernsehempfänger allenfalls etwas zu verstimmen ist, um eine etwa noch bestehende Frequenzversetzung auszugleichen.

Es sei an dieser Stelle bemerkt, daß es (aus DE-C-1 023 801) bekannt ist, in einem Nachrichtenübertragungssystem nach Art eines Trägerfrequenzsystems die Sendeseite des Systems mit einer die einzelnen Nachrichten in zeitlicher Aufeinanderfolge, vorzugsweise äquidistant abtastenden Anordnung zu versehen, deren Abtastfrequenz für jede Nachricht wenigstens doppelt so groß ist wie die Bandbreite der jeweiligen Nachricht und die aus den bei der Abtastung gebildeten Frequenzspektren jeder Nachricht wenigstens ein Seitenband dem Übertragungsweg zuführt, und empfangsseitig Mittel zur Wiedergewinnung der ursprünglichen Nachrichten aus den übertragenen Seitenbändern vorzusehen, wobei die empfangsseitigen Mittel aus einem Filtersystem bestehen können, das die einzelnen Seitenbänder in getrennte Übertragungskanäle aufzweigt, in denen vorzugsweise mittels Frequenzumsetzung die einzelnen Nachrichten wiedergewonnen werden ; ferner ist es (aus DE-C-1 135 972) bekannt, zur Verlagerung eines elektrischen Wechselstromsignals in eine andere Frequenzlage unter Verwendung eines mit einer Frequenz, die mindestens doppelt so hoch ist wie die Differenz aus der höchsten und der niedrigsten Signalfrequenz, betätigten Schalters, dem ein Bandfilter vor- und ein Bandfilter nachgeschaltet ist, wobei der Durchlaßbereich der Bandfilter jeweils einem der Seitenbänder entspricht, die beim Schaltvorgang entstehen, als Schalter einen an sich bekannten Schaltkreis zu verwenden, in welchem der Schalter über eine Längsinduktivität zwei Querkapazitäten verbindet, wobei diese Bauelemente und die Schaltdauer so festgelegt sind, daß ein Ladungsaustausch zwischen den Kapazitäten in Form einer Halbschwingung vor sich geht. Nähere Berührungspunkte mit einem Breitband-Fernmeldesystem mit jeweils zwischen einer zentralen Sendestelle und einem empfangsseitigen Teilnehmeranschluß liegendem, eine Mehrzahl von nach Maßgabe von Videosignalen pulsmodulierten TV-Signalen im Zeitmultiplex übertragendem Lichtwellenleiter und der Verteilung der TV-Signale auf eine bei einunddemselben Teilnehmeranschluß vorgesehene Mehrzahl von Videoempfängern sind indessen nicht gegeben.

In weiterer Ausgestaltung der Erfindung können die pulsmodulierten TV-Signale in einem allen Zeitkanälen gemeinsamen Pulswandler in PAM-Signale umgesetzt werden, was entsprechend wenig aufwendig ist ; alternativ dazu können aber die pulsmodulierten TV-Signale auch in zeitkanalindividuellen Pulswandlern in PAM-Signale umgesetzt werden, womit eine höhere Nebensprechdämpfung erzielt wird.

Im Breitband-Fernmeldesystem gemäß der Erfindung läßt sich der empfängerseitige Aufwand besonders klein halten, wenn in weiterer Ausgestaltung der Erfindung die PAM-Signale jeweils im Wege einer impulsweisen Energieübertragung zu dem jeweiligen Frequenzbandpaß übertragen werden ; dies ermöglicht es, nahezu die gesamte Energie des PAM-Signals in das dem jeweiligen Videoempfänger zugeordnete Frequenzband umzusetzen, wodurch sich eine entsprechende Verbesserung des Signal/Geräusch-Verhältnisses ergibt, die bei nicht zu großen Leitungslängen zum Videoempfänger eine weitere Verstärkung als unnötig erscheinen läßt.

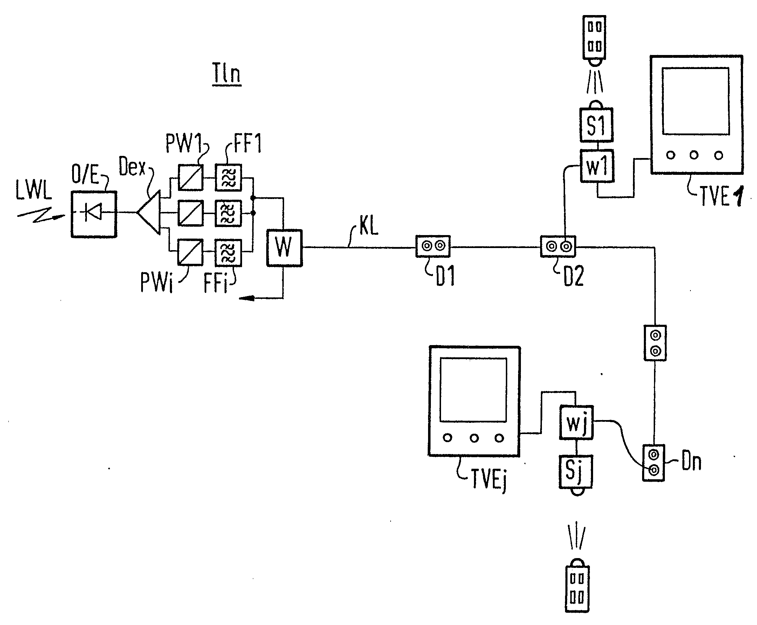

Weitere Besonderheiten der Erfindung ergeben sich aus den nachstehenden Erläuterungen der Erfindung anhand der Zeichnung.

In der Zeichnung ist schematisch in einem zum Verständnis der Erfindung erforderlichen Umfange ein Ausführungsbeispiel für ein Breitband-Fernmeldesystem gemäß der Erfindung dargestellt. Dieses Breitband-Fernmeldesystem weist einen (in der Zeichnung nur in seiner Funktion angedeuteten) Lichtwellenleiter LWL auf, der von einer in der Zeichnung nicht näher dargestellten zentralen Sendestelle zu einem Teilnehmeranschluß Tln führen möge ; dieser Teilnehmeranschluß Tln möge z. B. einen Wohnungsanschluß mit einer Mehrzahl von Video-Empfängern TVE1,...TVEj bilden, zu/von dem in der eingangs erläuterten Weise jeweils eine Mehrzahl von Kommunikationsmöglichkeiten gegeben sein mag. Der Lichtwellenleiter LWL, der sendeseitig an einen beispielsweise durch eine lichtemittierende Diode (LED) oder eine Laserdiode gegebenen elektro-optischen Wandler angeschlossen sein mag, ist empfangsseitig durch einen mit einer Fotodiode realisierbaren optoelektrischen Wandler O/E abgeschlossen. Über den Lichtwellenleiter LWL möge eine Mehrzahl von sendeseitig nach Maßgabe von Videosignalen pulsmodulierten, vorzugsweise pulsphasenmodulierten oder pulscodemodulierten TV-Signalen im Zeitmultiplex übertragen werden. Vorschläge für die Zeitmultiplexübertragung finden sich bereits an anderer Stelle, beispielsweise in der DE-A-28 56 217, weshalb hier nicht weiter darauf eingegangen wird, zumal dies zum Verständnis der Erfindung auch nicht erforderlich ist.

Der opto-elektrische Wandler O/E führt nun zunächst zu einem Demultiplexer Dex, der durch eine der Anzahl der im Zeitmultiplexsystem vorgesehenen Zeitkanäle entsprechende Anzahl von zyklisch im Takt der empfangenen Zeitmultiplexsignale geschlossenen Zeitkanalschaltern gebildet sein kann. An die den einzelnen Zeitkanälen zugeordneten Ausgänge des Demultiplexers Dex ist jeweils eine Pulswandlerschaltung PW angeschlossen. In diesen Pulswandlerschaltungen, die je nach der auf dem Lichtwellenleiter gegebenen Pulsmodulationsart beispielsweise durch einen üblichen PPM/PAM-Wandler oder durch einen üblichen PCM-Decoder gebildet sein können, werden die pulsmodulierten TV-Signale, die über den Lichtwellenleiter LWL zum Teilnehmeranschluß Tln hin in den einzelnen Zeitkanälen übertragen werden, zeitkanalindividuell in PAM-Signale umgesetzt. Den Pulswandlerschaltungen PW sind Frequenzbandpässe FF nachgeschaltet, die, ausgangsseitig zusammengeschaltet, über eine Weiche W zu einer teilnehmer- bzw. wohneinheitsindividuell vorgesehenen Verteilerleitung KL, vorzugsweise einer Koaxialleitung, führen, wobei diese Koaxialleitung ggf. auch durch eine in der betreffenden Wohneinheit bereits vorhandene Koaxialleitung einer Antennenanlage gebildet sein kann. An die Koaxialleitung KL sind Steckdosen D1, ... Dn angeschlossen, an die in beliebiger Verteilung Videoempfänger TVE1, ... TVEj angeschlossen werden können ; in der Zeichnung ist dabei angedeutet, daß die Steckdosen D1 ... Dn auch zusätzliche Buchsen für einen (hier nicht weiter interessierenden) Anschluß von Tonrundfunkempfängern aufweisen können. In dem in der Zeichnung skizzierten Breitband-Fernmeldesystem ist an die Videobuchse der Steckdose D2 ein Video-Empfänger TVE1 angeschlossen ; in entsprechender Weise ist an die Steckdose DN ein Video-Empfänger TVEj angeschlossen.

Die für die Video-Empfänger TVE1, TVEj bestimmten Videosignale, genauer gesagt die nach Maßgabe dieser Videosignale pulsmodulierten TV-Signale, werden (nach Maßgabe von in der zentralen Sendestelle jeweils gespeicherten Bestimmungsinformationen) in der zentralen Sendestelle im Zeitmultiplex zusammengefaßt, so daß die pulsmodulierten TV-Signale über den Lichtwellenleiter LWL zum Demultiplexer Dex in Zeitkanälen übertragen werden, die von den an der Koaxialleitung KL gerade betriebenen Video-Empfängern TVE1, TVEj her zu bestimmen, d. h. festzulegen oder zumindest festzustellen sein mögen. Dabei gelangen die für einen an einer beliebigen Steckdose der Koaxialleitung betriebenen Video-Empfänger, beispielsweise für den an der Steckdose D2 betriebenen Video-Empfänger TVE1, bestimmten TV-Signale zu der in dem betreffenden Zeitkanal vom Demultiplexer Dex angesteuerten Pulswandlerschaltung, beispielsweise zur Pulswandlerschaltung PW1, die die empfangenen PPM- oder PCM-Signale zeitkanalindividuell in PAM-Signale umsetzt und diese dem nachfolgenden Frequenzbandpaß FF1 zuführt. Das Frequenzbandfilter FF1 ist für ein bestimmtes Frequenzband des aus einer mit der Taktfrequenz der PAM-Signale periodischen Folge solcher Frequenzbänder — jeweils von der Breite des Videosignal-Frequenzbandes — bestehenden Frequenzspektrums des von der vorangehenden Pulswandlerschaltung PW1 bereitgestellten PAM-Signals durchlässig, wobei das genannte Frequenzband — wie die übrigen Frequenzbänder auch — die gesamte in dem betreffenden Zeitkanal übertragene und im PAM-Signal enthaltene Signalinformation enthält ; die in diesem Frequenzband übertragene Signalinformation gelangt dann auf dem Wege über die Weiche W, die Koaxialleitung KL und im Beispiel über die Steckdose D2 und die Weiche W1 zu demjenigen Videoempfänger, im Beispiel dem Video-Empfänger TVE1, dessen Abstimmschaltung auf eben dieses Frequenzband eingestellt ist.

In entsprechender Weise gelangen beispielsweise für den unter den in der Zeichnung dargestellten Verhältnissen gerade an der Steckdose Dn betriebenen Video-Empfänger TVEj bestimmte TV-Signale in einem vom Video-Empfänger TVEj her zu bestimmenden anderen Zeitkanal zu der in diesem Zeitkanal vom Demultiplexer Dex angesteuerten, die empfangenen PPM- oder PCM-Signale zeitkanalindividuell in PAM-Signale umsetzenden Pulswandlerschaltung, beispielsweise zur Pulswandlerschaltung PWi, die dem Frequenzbandfilter FFi vorgeschaltet ist. Das Frequenzbandfilter FFi ist für ein anderes Frequenzband aus dem PAM-Signal-Frequenzspektrum durchlässig, so daß die in diesem anderen Frequenzband übertragene Information auf dem Weg über Weiche W, Koaxialleitung KL und im Beispiel über die Steckdose Dn und die Weiche wj zu demjenigen Videoempfänger, im Beispiel dem Video-Empfänger TVEj, hin gelangt, dessen Tuner auf das betreffende Frequenzband eingestellt ist.

Es sei hier bemerkt, daß in Abweichung von den in der Zeichnung dargestellten Verhältnissen an Stelle von zeitkanalindividuellen Pulswandlerschaltungen (PW1 ... PWi) auch eine gemeinsame Pulswandlerschaltung vorgesehen sein kann, die dann dem Demultiplexer Dex vorgeschaltet wäre.

Die Frequenzspektren der PAM-Signale bestehen, wie schon gesagt, aus mit der Taktfrequenz der PAM-Signale periodischen Folgen von Frequenzbändern jeweils von der Breite des Videosignal-Frequenzbandes. Zweckmäßigerweise wird nun die Taktfrequenz mit beispielsweise etwa 12 MHz so gewählt, daß Vielfache der Taktfrequenz der PAM-Signale zumindest angenähert bei Bandgrenzen einer Mehrzahl von Fernsehkanälen liegen. So liegen beispielsweise Vielfache einer PAM-Signal-Taktfrequenz von 12 MHz etwa im Fernsehkanal 1 bei 48 MHz, im Gebiet des Fernsehkanals 4 bei 60 MHz, im Gebiet des Fernsehkanals 6 bei 180 MHz und im Gebiet des Fernsehkanals 11 bei 216 MHz. Dies ermöglicht es, den einzelnen Videoempfängern die für sie bestimmten Videosignale jeweils zumindest angenähert in einer normalen Fernsehsignallage, beispielsweise in den Frequenzbändern 47 ... 54 MHz, 59 ... 66 MHz, 179 ... 186 MHz und 215 ... 222 MHz zuzuführen, wobei der das jeweilige Videoprogramm wiedergebende Fernsehempfänger allenfalls, wie in dem angegebenen Beispiel der Fernsehkanäle 4, 6 und 11, etwas verstimmt werden müßte, um eine dabei noch bestehende Frequenzversetzung von etwa 1 bis 2 MHz auszugleichen, was indessen in der Regel unproblematisch ist.

Die PAM-Signale gelangen, ohne daß dies in der Zeichnung noch im einzelnen dargestellt ist, von der jeweiligen Pulswandlerschaltung PW zum nachfolgenden Frequenzbandfilter FF zweckmäßigerweise im Wege einer impulsweisen Energieübertragung, bei der zumindest angenähert die gesamte Energie des PAM-Signals in das gewünschte Frequenzband umgesetzt wird. Schaltungen für eine solche impulsweise Energieübertragung sind als sog. Nachladeschaltungen (beispielsweise aus der DE-C-1 227 079 oder der DE-C-1 282 728) oder als sogenannte Resonanzumladungsschaltungen bekannt, weshalb hier nicht weiter darauf eingegangen zu werden braucht.

Die Bestimmung des Zeitkanals und damit aufgrund starrer Zuordnung zwischen Zeit- und Frequenzkanälen auch des Frequenzkanals, in dem die von einem Videoempfänger zu empfangenden Videosignale übertragen werden, kann bei vorgegebener Belegung der Kanäle mit unterschiedlichen Videoprogrammen durch Einstellung der Abstimmschaltung (Tuner) des Videoempfängers auf einen ein gewünschtes Programm führenden Frequenzkanal getroffen werden, ggf. nachdem durch Hineinsehen bzw. -hören in die einzelnen Programme festgestellt wurde, welcher Kanal ein gewünschtes Programm führt. Es ist aber auch möglich, daß eine Bestimmung darüber, welche Videosignale bei einem Teilnehmer gerade zu empfangen sein sollen, vom Video-Empfänger her über einen Rückkanal mit Hilfe von den Video-Empfängern TVE1, TVEj zugehörigen Rückkanaleinrichtungen S1, Sj getroffen werden kann. In der Zeichnung ist dazu angedeutet, daß den Rückkanaleinrichtungen S1, Sj beispielsweise durch eine Fernbedienungseinrichtung drahtlos entsprechende Infrarot- oder Ultraschallsignale zugeführt werden können, die dann jeweils, ohne daß dies in der Zeichnung näher dargestellt ist, in den Rückkanaleinrichtungen in Digitalsignalworte von z. B. 8 Bits umgesetzt werden können, um dann in den einzelnen an der Koaxialleitung KL betriebenen Video-Empfängern TVE (bzw. ihren Rückkanaleinrichtungen) zugeordneten Rückkanälen ebenfalls auf der Koaxialleitung KL und weiter über die Weiche W zu der zentralen Vermittlungsstelle hin übertragen zu werden, wo sie schließlich als Bestimmungsinformationen, wie sie zuvor erwähnt wurden, wirksam werden.

## Ansprüche

1. Fernmeldesystem mit einem jeweils zwischen einer Sendestelle und einem empfangsseitigen Anschluß liegenden Leiter, über den eine Mehrzahl von sendeseitig nach Maßgabe von Kommunikationssignalen pulsmodulierten Signalen im Zeitmultiplex übertragen wird, wobei die in den einzelnen Zeitkanälen übertragenen, pulsmodulierten Signale in PAM-Signale umgesetzt und diese jeweils für ein Frequenzband aus der das Frequenzspektrum der PAM-Signale bildenden Folge von Frequenzbändern durchlässigen Frequenzbandpässen zugeführt werden, deren Ausgangssignale auf eine weiterführende Leitung gelangen, dadurch gekennzeichnet, daß in einem Breitband-Fernmeldesystem mit zwischen einer vorzugsweise zentralen Sendestelle und einem empfangsseitigen Teilnehmeranschluß (Tln) liegendem Lichtwellenleiter (LWL) die in von beim Teilnehmeranschluß (Tln) betriebenen Videoempfängern (TVE1, ... TVEj) bestimmbaren Zeitkanälen übertragenen, nach Maßgabe von Videosignalen pulsmodulierten TV-Signale empfangsseitig in solche PAM-Signale, deren Taktfrequenz-Vielfache zumindest angenähert bei Bandgrenzen einer Mehrzahl von Fernsehkanälen liegen, umgesetzt und Frequenzbandpässen (FF1, ... FFi) zugeführt werden, deren Ausgangssignale auf eine teilnehmerindividuelle Verteilerleitung (KL) gelangen, an die die beim Teilnehmeranschluß (Tln) gerade betriebenen Video-Empfänger (TVE1, ... TVEj) angeschaltet sind.

2. Breitband-Fernmeldesystem nach Anspruch 1, dadurch gekennzeichnet daß die pulsmodulierten TV-Signale in zeitkanalindividuellen Pulswandlern (PW1, ... PWi) in PAM-Signale umgesetzt werden.

3. Breitband-Fernmeldesystem nach Anspruch 1, dadurch gekennzeichnet, daß die pulsmodulierten TV-Signale in einem allen Zeitkanälen gemeinsamen Pulswandler in PAM-Signale umgesetzt werden.

4. Breitband-Fernmeldesystem nach einem der Ansprüche 1 bis 3, gekennzeichnet durch impulsweise Energieübertragung vom jeweiligen Pulswandler (PW) zu dem jeweiligen Frequenzbandpaß (FF).

## Claims

1. Telecommunications system having a conductor which is respectively arranged between a transmitting station and a receiving-end terminal and by means of which a plurality of signals which at the transmitting end are pulse-modulated in accordance with communication signals are transmitted in time division multiplex, where the pulse-modulated signals transmitted in the individual time channels are converted into PAM signals and the latter are fed to frequency band pass filters which are respectively transmissive to a frequency band from the sequence of frequency bands forming the frequency spectrum of the PAM signals, and whose output signals are fed to a continuing line, characterised in that in a wideband telecommunications system having a light waveguide (LWL), which is arranged between a preferably central transmitting station and a receiving-end subscriber terminal (Tln), the TV signals, which are pulse-modulated in accordance with video signals and transmitted in time channels which are determinable by video receivers (TVE1 ... TVEj) operated at the subscriber terminal (Tln), are converted into such PAM signals at the receiving end, whose clock pulse frequency multiples range at least approximately at band limits of a plurality of television channels, and are fed to frequency band pass filters (FF1 ... FFi), whose output signals are supplied to a subscriber-individual distributing line (KL), to which the video receivers (TVE1 ... TVEj) currently operated at the subscriber terminal (Tln) are connected.

2. Wide-band telecommunications system as claimed in claim 1, characterised in that the pulse-modulated TV signals are converted into PAM signals in time-channel-individual pulse converters (PW1 ... PWi).

3. Wide-band telecommunications system as claimed in claim 1, characterised in that the pulse-modulated TV signals are converted into PAM signals in a pulse converter which is common to all time channels.

4. Wide-band telecommunications system as claimed in one of claims 1 to 3, characterised by pulse-wise energy transmission from the respective pulse converter (PW) to the respective frequency band pass filter (FF).

## Revendications

1. Système de télécommunications avec un conducteur situé entre un poste émetteur et un branchement disposé du côté récepteur, et par l'intermédiaire duquel on transmet en multiplexage temporel, du côté émission, des signaux modulés en impulsion en fonction des signaux de communication, les signaux modulés en impulsion dans les différents canaux temporels étant convertis en signaux modulés en amplitude et en impulsion, et ceux-ci étant appliqués à des passe-bandes transparents pour une bande de fréquence de la bande de fréquence d'une suite de bandes de fréquences qui forme le spectre de fréquences des signaux modulés en amplitude et en impulsion, et dont les signaux de sortie parviennent à un conducteur aval, caractérisé par le fait que dans un système de télécommunications à large bande, avec un guide d'ondes de lumière (LWL) situé de préférence entre un poste émetteur central et une ligne d'abonné (Tln), les signaux TV modulés en impulsion en fonction des signaux vidéo et qui sont transmis dans des canaux temporels déterminés dans les récepteurs vidéo (TVE1, ... TVEj) opérant sur la ligne d'abonné (Tln), sont convertis du côté réception en des signaux modulés en amplitude et en impulsion dont les multiples de la fréquence de répétition se situent à peu près aux limites de la bande d'un multiple de canaux de télévision, et appliqués à des passe-bandes de fréquence (FF1, ... FFi) dont les signaux de sortie parviennent à un conducteur de distribution individuelle d'abonné (KL) et sont appliqués au récepteur vidéo (TVE1, ... TVEj) opérant précisément sur la ligne d'abonné (Tln).

2. Système de télécommunications à large bande selon la revendication 1, caractérisé par le fait que les signaux TV modulés en impulsion sont convertis en signaux modulés en amplitude et en impulsion dans des convertisseurs d'impulsions (PW1, ... PWi) associés individuellement aux canaux temporels.

3. Système de télécommunications à large bande selon la revendication 1, caractérisé par le fait que les signaux TV modulés en impulsion sont convertis en signaux modulés en amplitude et en impulsion dans un convertisseur d'impulsions commun à tous les canaux temporels.

4. Système de télécommunications selon l'une des revendications 1 à 3, caractérisé par la transmission impulsionnelle de l'énergie d'un convertisseur d'impulsions (PW) au passe-bande de fréquence (FF).

TVE1

Dn

S1 W1

D2

wj Sj

TVEj

D1

KL

Tln

FF1

PW1

PWi

FFi

W

O/E Dex

LWL